# EUROPÄISCHE PATENTSCHRIFT

(11) **EP 2 766 217 B1**
(45) Veröffentlichungstag und Bekanntmachung des Hinweises auf die Patenterteilung: **20.05.2015**
(21) Anmeldenummer: 12750386.0
(22) Anmeldetag: 23.08.2012
(51) Int. Cl.: B60N 2/07, B60N 2/12

(54) **LÄNGSEINSTELLBARER FAHRZEUGSITZ**
LONGITUDINALLY ADJUSTABLE VEHICLE SEAT
SIÈGE DE VÉHICULE RÉGLABLE EN LONGUEUR

(30) Priorität: 12.10.2011 DE 102011115948
(43) Veröffentlichungstag der Anmeldung: 20.08.2014
(73) Patentinhaber: Johnson Controls Components GmbH & Co. KG, 67657 Kaiserslautern (DE)
(72) Erfinder: DICK, Ingo, 66879 Niederstaufenbach (DE)
(74) Vertreter: Finger, Catrin
(86) Internationale Anmeldenummer: PCT/EP2012/066439
(87) Internationale Veröffentlichungsnummer: WO 2013/053526

(56) Entgegenhaltungen:
- DE-T2- 69 832 435

## Beschreibung

Die Erfindung betrifft einen längseinstellbaren Fahrzeugsitz mit den Merkmalen des Oberbegriffs des Anspruches 1.

Aus der DE 100 39 510 B4 ist ein Sitzschienenpaar für einen längseinstellbaren Fahrzeugsitz bekannt, mit einer Unterschiene und einer relativ zur Unterschiene in Sitzschienenlängsrichtung verschiebbar geführten Oberschiene, welche sich mit ihren Profilen gegenseitig hintergreifen, mit Kugeln, welche zwischen der Unterschiene und der Oberschiene in einem Zusammenwirkungsbereich angeordnet sind, und einer Verriegelungs Vorrichtung zum Verriegeln von Unterschiene und Oberschiene. Hierbei ist das Profil der Unterschiene und der Oberschiene in dem Zusammenwirkungsbereich symmetrisch zu einer Ebene, welche durch die Sitzschienenlängsrichtung und die Vertikale definiert ist. Die Kugeln stehen in Kontakt mit Kugellaufbahnen, welche jeweils in einem Neigungsbereich der Oberschiene ausgebildet sind und in betragsmäßig gleichem Winkel zur Horizontalen geneigt sind. Die DE 10 2006 032 328 A1 beschreibt einen Fahrzeugsitz, welcher einen auf einer Gleitschiene in einer longitudinalen Richtung zwischen einer vorderen und einer hinteren Position gleitend montierten Sitz umfasst, wobei der Sitz Einreichungen aufweist, um die Gleitschiene nach einer Entriegelungs-Operation eines Anwenders entriegelt zu halten, und Einrichtungen zum Zurückhalten der Sitzfläche des Sitzes, wenn sich die Sitzfläche in der/einer vorderen Position befindet, solange die Sitzfläche nicht eine rückwärts gerichtete Kraft erfährt, welche größer ist als ein vorbestimmter Wert.

Aus der DE 203 08 465 U1 ist eine Sitzschiene für einen Fahrzeugsitz, insbesondere für einen Kraftfahrzeugsitz bekannt, welche als Teil eines Längseinstellers ausgebildet ist und im Bereich des hinteren Endes einen Endanschlag für eine zweite Sitzschiene aufweist, wobei dass zwischen dem Endanschlag und dem hinteren Ende in der Wand der Sitzschiene eine Sicke vorgesehen ist.

Ferner ist aus der DE 10 2008 056 969 B3 ein Längseinsteller für einen Fahrzeugsitz bekannt. Hierbei definieren bei einem Sitzschienenpaar für einen längseinstellbaren Fahrzeugsitz mit einer strukturfesten ersten Sitzschiene, einer in dieser ersten Sitzschiene geführten, mit dem Fahrzeugsitz verbundenen zweiten Sitzschiene, einem ersten Endanschlag, einem zweiten Endanschlag, und einer lösbaren Verriegelungsvorrichtung zum lösbaren Verriegeln der Position der ersten Sitzschiene gegenüber der zweiten Sitzschiene, eine mit dem ersten Endanschlag zusammenwirkende erste Anschlagsfläche und eine mit dem zweiten Endanschlag zusammenwirkende zweite Anschlagsfläche einen Verfahrweg der zweiten Sitzschiene relativ zur ersten Sitzschiene. Ferner ist ein über eine Betätigungsvorrichtung betätigbarer dritter Endanschlag vorgesehen, welcher in Zusammenwirken mit der ersten Anschlagsfläche eine dritte Endstellung definiert, und diese dritte Endstellung der zweiten Sitzschiene relativ zur ersten Sitzschiene ist zwischen besagter erster Endstellung und besagter zweiter Endstellung angeordnet. Bei diesem dritten, wegschaltbaren Endanschlag handelt es sich bevorzugt um den hinteren Endanschlag für die normale Benutzung, so dass der Verfahrweg bei Bedarf nach hinten vergrößert werden kann. In Fig. 19 dieser Druckschrift ist zudem ein Endanschlag dargestellt, welcher durch jeweils zwei parallele Einschnitte und ein Eindrücken des Zwischenbereichs gebildet ist, der mit einem Kugelhalter zusammenwirkt.

Weiterhin offenbart das Dokument DE69832435 T2 einen Fahrzeugsitz, der alle Merkmale des Oberbegriffs des Anspruchs 1 aufweist.

Der Erfindung liegt die Aufgabe zu Grunde, einen längseinstellbaren Fahrzeugsitz der eingangs genannten Art zu verbessern. Insbesondere soll der Komfort erhöht werden. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche. Erfindungsgemäß ist hierbei in mindestens einer der Sitzschienen mindestens eine Erhebung, insbesondere bevorzugt hergestellt durch eine Eindrückung von außen, vorgesehen, welche in die innen ausgebildete Kugellaufbahn buckelförmig hineinragt, wobei die Erhebung von der Kugel oder den Kugeln und dem Kugelhalter überwindbar ist.

Das Vorsehen einer mittels spanloser Bearbeitung hergestellten Erhebung ermöglicht eine schnelle, einfache Herstellung derselben, wobei das Eindrücken von außen her unter plastischer Verformung der Sitzschiene erfolgt, so dass dieser Bereich der Sitzschiene leicht zugänglich ist, insbesondere wenn die Erhebung im abgerundeten Eckbereich der Sitzschiene vorgesehen ist. Vorteilhaft ist weiterhin, dass - im Falle einer mittels Umformen hergestellten Sitzschiene - die (nochmalige) plastische Verformung in einem bereits plastisch verformten Bereich erfolgt.

Besonders bevorzugt ist neben der Erhebung mindestens ein Endanschlag durch eine weitere Eindrückung gebildet, so dass ein gemeinsames Werkzeug, insbesondere ein Stempel mit halbkugelförmigem Ende, für beide Eindrückungen verwendet werden kann.

Der Fahrzeugsitz weist vorzugsweise eine Easy-Entry-Funktion auf, wobei die Erhebung derart angeordnet ist, dass zumindest die vorderste Kugel, wenn zumindest die vorderste Kugel die Erhebung passiert hat, dieselbe, und damit über den Kugelhalter und die zweite Sitzschiene der Fahrzeugsitz in der Easy-Entry-Stellung gehalten wird. Hierbei kann eine Verschiebbarkeit, begrenzt durch die Erhebung und den vorderen Endanschlag, vorgesehen sein. Dadurch, dass zum Überwinden der Erhebung eine gewisse Kraft erforderlich ist, die vom Benutzer aufgewendet werden muss, kann der Benutzer erkennen, dass der Fahrzeugsitz in der korrekten Stellung angeordnet ist.

Insbesondere bevorzugt ist hierbei der Fahrzeugsitz, wenn zumindest die vorderste Kugel die Erhebung passiert hat, in einem begrenzten Bereich zwischen dem vorderen Endanschlag und der Erhebung verschiebbar, so dass das Zurückziehen des Fahrzeugsitzes vereinfacht wird.

In der Schiene ist die Erhebung derart angeordnet, dass der Fahrzeugsitz in einem Bereich von maximal fünf Kugeldurchmessern der Kugeln zwischen dem vorderen Endanschlag und der Erhebung verschiebbar ist.

Insbesondere ist die Erhebung derart angeordnet, dass der Fahrzeugsitz in einem Bereich von minimal einem, insbesondere minimal zwei Kugeldurchmessern der Kugeln zwischen dem vorderen Endanschlag und der Erhebung verschiebbar.

Die Erhebung ist vorzugsweise in einem abgerundeten Eckbereich der Sitzschiene angeordnet.

Insbesondere bevorzugt ist die Erhebung in Richtung der Winkelhalbierenden zwischen Boden und Seite der Sitzschiene angeordnet.

Die Erhebung, welche von mindestens einer Kugel überwindbar ist, weist vorzugsweise eine Höhe von maximal 1/4 des Kugeldurchmessers der Kugel auf.

Besonders bevorzugt weist der Halter eine Schräge auf und gelangt leicht in Kontakt mit der Erhebung, wobei beim Überfahren eine leichte, rein elastische Verformung des Halters erfolgt.

Vorzugsweise ist der maximale Verstellbereich des Kugelhalters nach vorn und nach hinten jeweils durch einen stationären Endanschlag begrenzt, wobei mindestens einer der Endanschläge, insbesondere der vordere Endanschlag, durch eine größere Erhebung gebildet ist. Auch diese Erhebung ist vorzugsweise mittels Eindrückens hergestellt.

Die einen Endanschlag bildende Erhebung weist bevorzugt eine Höhe von minimal 1/3 des Kugeldurchmessers der Kugel(n) auf und gelangt in ihrer Funktion als Endanschlag in Anlage an den Kugelhalter und insbesondere bevorzugt nicht in Anlage an die äußerste Kugel.

Ein derartiger Fahrzeugsitz kann beispielsweise bei einem Personenkraftfahrzeug oder einem Nutzfahrzeug verwendet werden, wobei es sich nicht notwendigerweise um den Fahrersitz handeln muss. Ein derartiger Fahrzeugsitz ist vorzugsweise in einer vorderen Sitzreihe vorgesehen, er kann aber auch in einer mittleren oder hinteren Sitzreihe vorgesehen sein, beispielsweise auch bei einem Van.

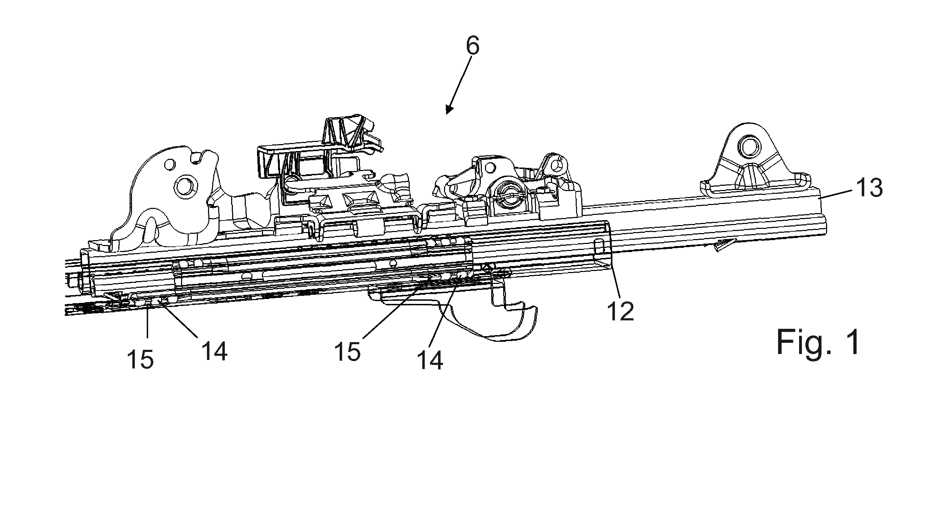

Im Folgenden ist die Erfindung anhand von Ausführungsbeispielen, teilweise unter Bezugnahme auf die Zeichnung, näher erläutert. Es zeigen
- Fig. 1: eine perspektivische Ansicht eines Sitzschienenpaares für einen längseinstellbaren Fahrzeugsitz gemäß dem ersten Ausführungsbeispiel,

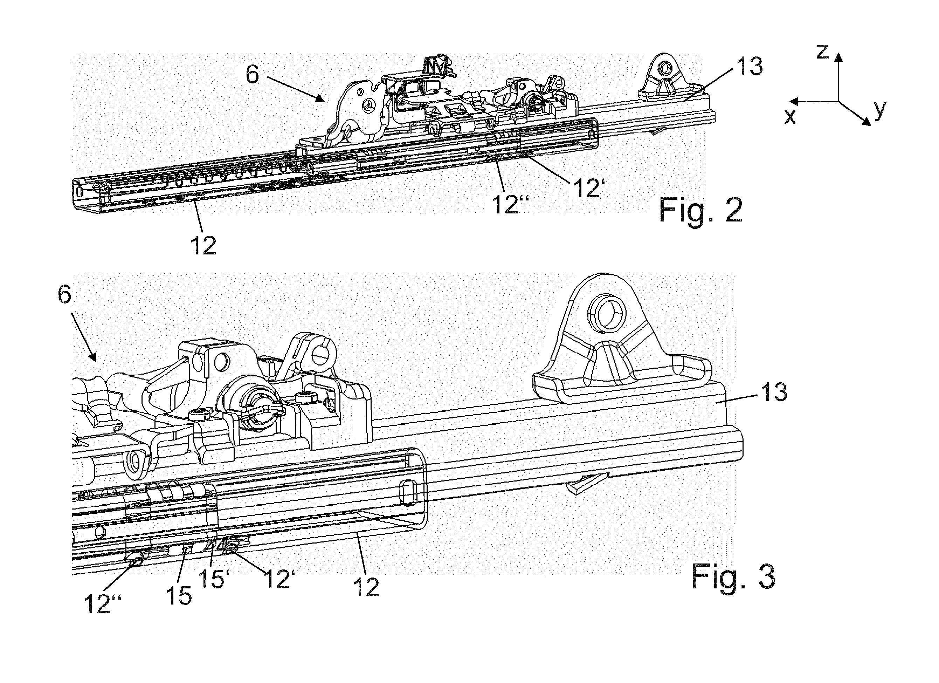

- Fig. 2: eine andere perspektivische Ansicht des Sitzschienenpaares,
- Fig. 3: eine Detailansicht von Fig. 2,
- Fig. 4: einen schematisierten Längsschnitt durch das Sitzschienenpaar,

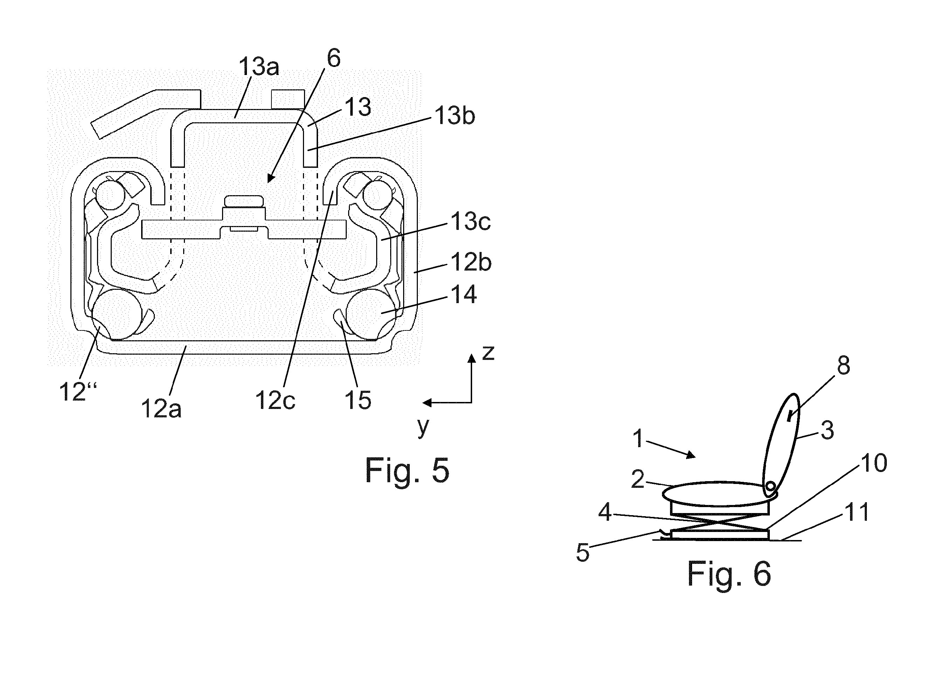

- Fig. 5: eine schematisierten Querschnitt durch das Sitzschienenpaar, und
- Fig. 6: eine schematische Darstellung eines Fahrzeugsitzes mit erfindungsgemäßen Sitzschienenpaaren.

Ein längseinstellbarer Fahrzeugsitz 1, vorliegend für ein dreitüriges Kraftfahrzeug, weist eine Sitzfläche 2, eine über einen Beschlag auf bekannte Weise neigungseinstellbar mit der Sitzfläche verbundene Rückenlehne 3, und ein unterhalb der Sitzfläche 2 angeordnetes Scherengestell 4 zur Neigungs- und Höheneinstellbarkeit der Sitzfläche 2 auf, wobei die Neigungs- und Höheneinstellbarkeit der Sitzfläche 2 alternativ auch entfallen kann.

Der Fahrzeugsitz 1 ist über zwei Sitzschienenpaare 10 mit der Fahrzeugstruktur 11 verbunden, wobei die beiden Sitzschienenpaare 10 jeweils einander entsprechend ausgebildet sind, so dass im Folgenden nur ein Sitzschienenpaar 10 näher beschrieben wird. Der Fahrzeugsitz 1 weist einen Längseinsteller mit einem Bügel 5 als Bedienelement für den Längseinsteller auf, wobei über den Bügel 5 eine das Sitzschienenpaar 10 verriegelnde Verriegelungsvorrichtung 6 entriegelbar ist, so dass der Fahrzeugsitz 1 innerhalb eines Komfortverstellbereichs längseinstellbar ist. Zum Bedienen der Verriegelungsvorrichtung 6 ist besagter Bügel 5 unten am Fahrzeugsitz 1 vorgesehen. Das über den Bügel 5 eingeleitete Drehmoment wird über eine nicht näher dargestellte Querstange auf die an beiden Sitzschienenpaaren 10 vorgesehenen Verriegelungsvorrichtungen 6 gleichzeitig übertragen.

Ferner weist der Fahrzeugsitz 1 eine Easy-Entry-Funktion auf. Zum Erleichtern des Einsteigens kann mittels Betätigung eines an der Lehnenseite angeordneten Griffs 8 die Rückenlehne 3 entriegelt und nach vorn geschwenkt werden, wobei vorliegend zeitlich etwas versetzt bezüglich des Vorschwenkens der Rückenlehne 3 auch die Verriegelungsvorrichtung 6 entriegelt wird, so dass der Fahrzeugsitz 1 nach vorn verschiebbar ist, vorliegend über den Komfortverstellbereich hinaus. Hierbei wird, ausgelöst durch eine Betätigung des Griffs 8 und das damit verbundene Vorschwenken der Rückenlehne 3 ein nicht näher dargestellter Bowdenzug betätigt, welcher die Beschläge des Fahrzeugsitzes 1 entriegelt. Durch die Schwenkbewegung der Rückenlehne 3 werden zwei weitere Bowdenzüge betätigt, welche auf beiden Sitzseiten vorgesehen sind. Aufgrund der spiegelbildlichen Ausgestaltung wird im Folgenden nur auf eine Sitzseite näher eingegangen. Der Bowdenzug, welcher einen auf bekannte Weise ausgebildeten Überhubschutz aufweist, ist mit der Verriegelungsvorrichtung 6 verbunden, welche beim Vorschwenken der Rückenlehne 3 gelöst wird.

Ferner kann im Prinzip über den Bowdenzug eine Betätigung eines wegschaltbaren Endanschlags erfolgen, wie in der DE 10 2008 056 969 B3 beschrieben. Gemäß dem vorliegenden Ausführungsbeispiel ist jedoch kein wegschaltbarer Endanschlag vorgesehen.

Die Sitzschienenpaare 10 sind vorliegend einander entsprechend ausgebildet, so dass im Folgenden nur auf eines der Sitzschienenpaare 10 eingegangen wird. Das Sitzschienenpaar 10 weist eine, vorliegend unter Zwischenlage zweier Adapter, mit der Fahrzeugstruktur 11 fest verbundene, unten angeordnete, erste Sitzschiene 12 und eine mit dem Sitzunterbau, also vorliegend dem Scherengestell 4, verbundene zweite Sitzschiene 13 auf. Hierbei ist die erste Sitzschiene 12 mit einem an der Fahrzeugstruktur 11 anliegenden Boden 12a, in welchem Durchbrüche zur Anbindung vorgesehen sind, und zwei nach oben umgebogenen Seiten 12b ausgebildet, welche um 180° nach innen umgebogene Randbereiche 12c aufweisen. Die zweite Sitzschiene 13 ist innerhalb der ersten Sitzschiene 12 angeordnet, wobei sie einen oben angeordneten ebenen Bereich 13a zur Anbindung an das Scherengestell 4, zwei nach unten gebogene Seiten 13b und nach außen umgebogene Randbereiche 13c aufweist, welche zwischen den Seiten 12b und den Randbereichen 12c der ersten Sitzschiene 12 angeordnet sind, so dass die erste Sitzschiene 12 die zweite Sitzschiene 13 umgreift. Um die Reibung zwischen den beiden Sitzschienen 12 und 13 gering zu halten, sind mehrere Kugeln 14 oberhalb und unterhalb auf beiden Seiten der nach außen umgebogenen Randbereiche, d.h. jeweils im seitlichen Bereich des Sitzschienenzwischenraums, unter Einlage von Kugelkäfigen oder -haltern 15 angeordnet. Vorliegend sind vorne, unten zwei Kugeln 14 und hinten, unten drei Kugeln 14 vorgesehen. Vorn, oben sind drei Kugeln 14 mit etwas kleinerem Durchmesser vorgesehen, während hinten oben nur zwei Kugeln 14 mit etwas kleinerem Durchmesser vorgesehen sind. Die Anzahl der Kugeln 14 kann jedoch variiert werden, wobei gemäß dem vorliegenden Ausführungsbeispiel die Verwendung von zwei Kugeln 14 vorn, unten bevorzugt wird.

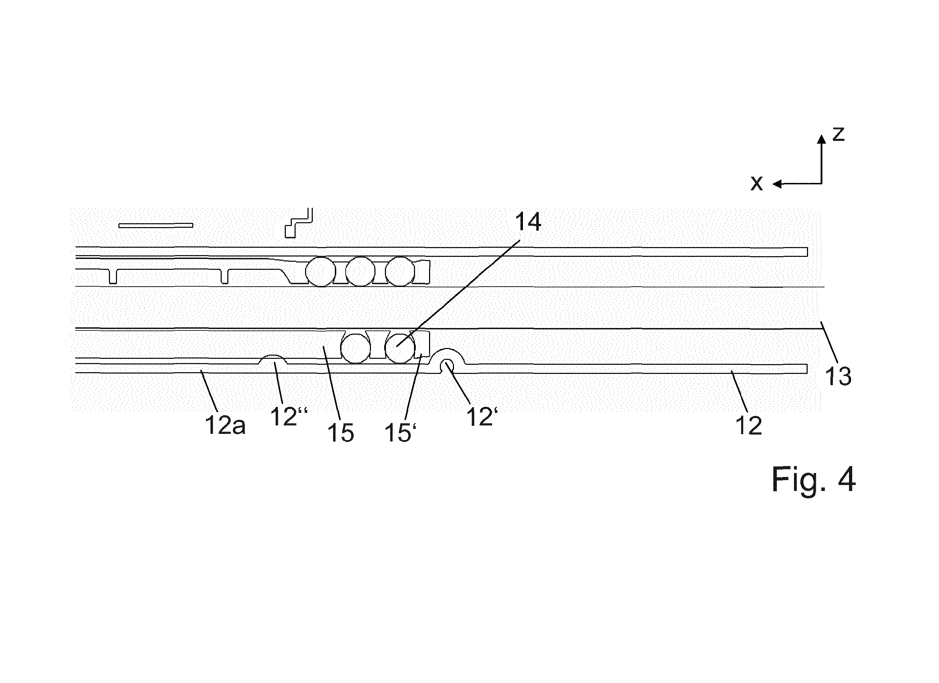

Die zweite Sitzschiene 13 ist für die normale Benutzung des Fahrzeugsitzes 1 zwischen durch Endanschläge bestimmten Endpositionen innerhalb eines Verstellbereichs verschiebbar und kann mit Hilfe besagter Verriegelungsvorrichtung 6, wie sie vom Prinzip her in der DE 10 2008 056 683 A1 gezeigt ist, oder alternativ beispielsweise einer Verriegelungsvorrichtung wie sie in der EP 1 389 557 B1 gezeigt ist, an verschiedenen Sitzlängspositionen des Fahrzeugsitzes 1 lösbar verriegelt werden. Zum Begrenzen des Verstellbereichs sind Endanschläge vorgesehen. Der vordere Endanschlag 12' wird durch eine Eindrückung gebildet, im Folgenden als Endanschlags-Erhebung bezeichnet, welche auf der Sitzschieneninnenseite der ersten Sitzschiene 12 eine in die Kugellaufbahn der im abgerundeten Eckbereich laufenden unteren Kugeln 14 so weit hineinragende Erhebung bildet, dass das vordere Ende des Kugelhalters 15 der unteren Kugeln 14 an ihm anstößt, wenn die zweite Sitzschiene 13 sich in ihrer vordersten Stellung befindet (siehe Fig. 4). Die Endanschlags-Erhebung ragt etwa in Höhe von 1/3 bis 1/2 Kugeldurchmesser in die Kugellaufbahn hinein. Der hintere Endanschlag kann auf entsprechende Weise ausgebildet sein. Alternativ können die Endanschläge auch entsprechend den in der DE 10 2008 056 969 B3 beschriebenen Endanschlägen ausgebildet sein.

Entgegen der Fahrtrichtung, etwas beabstandet zur Endanschlags-Erhebung angeordnet ist jeweils eine kleinere buckelförmige Erhebung 12" in den unteren Kugellaufbahnen vorgesehen, wobei die kleineren Erhebungen 12" vorliegend direkt in den abgerundeten Eckbereichen zwischen Boden 12a und Seiten 12b der ersten Sitzschiene 12 angeordnet und in einem 45°-Winkel zur Kugellaufbahn ausgerichtet sind. Die Höhe der kleineren Erhebung 12" beträgt vorliegend etwa 1/5 des Kugeldurchmessers. In der Regel beträgt die Höhe der kleineren Erhebung 12" maximal 1/4 des Kugeldurchmessers, um sicherstellen zu können, dass der Kugelhalter 15 samt Kugel(n) 14 über die kleinere Erhebung 12" bewegt werden kann.

Die Erhebung 12" wird mittels eines Stempels erzeugt, der vorliegend einen etwa halbkugelförmigen Kopf aufweist und von außen her auf die Sitzschiene 12 mit großer Kraft gedrückt wird, so dass eine plastische Verformung der Sitzschiene 12 erfolgt und auch die Innenwand im abgerundeten Eckbereich nach innen gedrückt wird, wodurch sich eine buckelförmige Erhebung ergibt, welche in die Kugellaufbahn hineinragt, sprich die gerade Lauffläche mit einem Buckel unterbricht.

Die Funktion des Längseinstellers ist folgende: Wird zum Erleichtern des Einsteigens in einer hinteren Reihe mittels des Griffs 8 die Rückenlehne 3 entriegelt und nach vom geschwenkt, so wird - vorliegend zeitlich etwas versetzt bezüglich des Vorschwenkens der Rückenlehne 3 - auch die Verriegelungsvorrichtung 6 entriegelt, so dass der Fahrzeugsitz 1 nach vom verschiebbar ist. Gelangt die vordere der Kugeln 14 an die kleinere Erhebung 12", so muss ein leichter Widerstand überwunden werden, um den Fahrzeugsitz 1 weiter nach vom schieben zu können. Entsprechendes gilt, wenn die zweite Kugel 14 danach die kleinere Erhebung 12" erreicht. Der Abstand der kleineren Erhebung 12" von der Endanschlags-Erhebung ist vorliegend etwas größer als der Abstand der beiden Kugeln 14, so dass ein leichtes Spiel für den Fahrzeugsitz 1 in der vordersten Stellung vorgesehen ist, wodurch das Rückschieben erleichtert wird.

Bei geeignet elastischer Ausführung des Kugelhalters 15 kann auch ein gewisser Kontakt des Kugelhalters 15 an die kleinere Erhebung 12" mit elastischer Verformung desselben vorgesehen sein, ohne die Funktion der kleineren Erhebung 12" zu behindern. Vorliegend hat der Kugelhalter 15 eine Schräge 15' am vorderen Ende, um leichter über die kleinere Erhebung 12" zu gelangen, wobei er jedoch am vorderen Endanschlag 12' direkt anliegt, ohne dass die vordere Kugel 14 in Kontakt mit dem Endanschlag 12' gelangt (vgl. Fig. 4).

Vorliegend sind vom unten nur zwei Kugeln 14 im Kugelhalter 15 vorgesehen, während oben drei Kugeln 14 vorgesehen sind, jedoch kann die Zahl der Kugeln 14 variiert werden, insbesondere kann nur eine Kugel oder drei und ggf. mehr Kugeln vorgesehen sein.

Gemäß einer nicht in der Zeichnung dargestellten Variante des ersten Ausführungsbeispiels sind der vordere Endanschlag und die kleinere Erhebung deutlich näher aneinander angeordnet, nämlich derart, dass nur die erste Kugel über die kleinere Erhebung gelangt, bevor der Kugelhalter am vorderen Endanschlag anstößt und die Vorwärtsbewegung des Fahrzeugsitzes stoppt. Auch diese Ausgestaltung ermöglicht eine definierte Endposition des Fahrzeugsitzes für die Easy-Entry-Stellung.

Gemäß einem zweiten, nicht in der Zeichnung dargestellten Ausführungsbeispiel ist eine kleinere Erhebung am hinteren Endbereich des Verstellbereichs vorgesehen und dient dazu, für den Benutzer erkennbar sicherzustellen, dass der Fahrzeugsitz sich in einer hinteren Stellung befindet, beispielsweise in einer Stellung, in welcher ein Kindersitz oder eine Babyschale am Sitz angebracht werden kann. In diesem Fall wirkt die kleinere Erhebung mit den hinteren Kugeln des hinteren Kugelhalters zusammen. Die Ausgestaltung der kleineren Erhebung entspricht der zuvor beschriebenen.

Es ist auch möglich, äquidistant oder auf beliebige andere Weise verteilt über den Verstellbereich des Fahrzeugsitzes mehrere kleinere Erhebungen vorzusehen, die dem Benutzer Zwischenstellungen anzeigen.

Gemäß einem weiteren, nicht in der Zeichnung dargestellten Ausführungsbeispiel sind die Sitzschienenpaare um 90° um die Längsachse gedreht zur Anordnung des ersten Ausführungsbeispiels angeordnet, d.h. die erste Sitzschiene ist beispielsweise an einer vertikal verlaufenden Wand der Fahrzeugstruktur angebracht, während die zweite Sitzschiene von innen (oder ggf. auch außen) her am Scherengestell (oder ggf. auch einem anderen Sitzunterbau) angebracht ist. Bei dieser seitlichen Anordnung sind die kleineren Erhebungen bevorzugt an den beiden abgerundeten Eckbereichen der unteren Seite der ersten Sitzschiene ausgebildet.

### Bezugszeichenliste

- 1: Fahrzeugsitz
- 2: Sitzfläche
- 3: Rückenlehne
- 4: Scherengestell
- 5: Bügel (Verriegelungsvorrichtung)
- 6: Verriegelungsvorrichtung
- 8: Griff
- 10: Sitzschienenpaar
- 11: Fahrzeugstruktur
- 12: erste Sitzschiene
- 12': vorderer Endanschlag
- 12": (kleinere) Erhebung
- 12a: Boden
- 12b: Seite
- 12c: Randbereich
- 13: zweite Sitzschiene
- 13a: ebener Bereich
- 13b: Seite
- 13c: Randbereich
- 14: Kugel
- 15: Kugelhalter
- 15': Schräge

## Patentansprüche

1. Längseinstellbarer Fahrzeugsitz (1) aufweisend
mindestens ein Sitzschienenpaar (10), mit einer strukturfesten ersten Sitzschiene (12), einer in dieser ersten Sitzschiene (12) geführten, mit dem Fahrzeugsitz (1) verbundenen zweiten Sitzschiene (13),
in Kugelhaltern (15) angeordnete Kugeln (14), welche zwischen der ersten Sitzschiene (12) und der zweiten Sitzschiene (13) angeordnet sind, um die Reibung zu vermindern, wobei die erste Sitzschiene (12) eine Kugellaufbahn bildet, entlang welcher die Kugeln (14) rollen,
einen ersten Endanschlag und einen zweiten Endanschlag, welche die Verfahrbarkeit des Sitzschienenpaares (10) begrenzen,
**dadurch gekennzeichnet, dass**
mindestens eine in die Kugellaufbahn ragende Erhebung (12") vorgesehen ist, wobei die Erhebung (12") von mindestens einer Kugel (14) und dem Kugelhalter (15) überwindbar ist.

2. Fahrzeugsitz nach Anspruch 1, **dadurch gekennzeichnet, dass** die Erhebung (12") durch eine plastische Verformung der Sitzschiene (12) aufgrund einer Eindrückung von außen gebildet ist.

3. Fahrzeugsitz nach Anspruch 1 oder 2, **dadurch gekennzeichnet, dass** der Fahrzeugsitz eine Easy-Entry-Funktion aufweist, und die Erhebung (12") derart angeordnet ist, dass zumindest die vorderste Kugel (14) die Erhebung (12") passieren kann, wodurch der Fahrzeugsitz (1) in der Easy-Entry-Stellung gehalten ist.

4. Fahrzeugsitz nach Anspruch 3, **dadurch gekennzeichnet, dass** der Fahrzeugsitz (1), wenn zumindest die vorderste Kugel (14) die Erhebung (12") passiert hat, in einem begrenzten Bereich zwischen dem vorderen Endanschlag (12') und der Erhebung (12") verschiebbar ist.

5. Fahrzeugsitz nach einem der vorhergehenden Ansprüche, **dadurch gekennzeichnet, dass** die Erhebung (12") in einem abgerundeten Eckbereich der ersten Sitzschiene (12) angeordnet ist.

6. Fahrzeugsitz nach einem der vorhergehenden Ansprüche, **dadurch gekennzeichnet, dass** die Erhebung (12") in Richtung der Winkelhalbierenden zwischen Boden (12a) und Seite (12b) der Sitzschiene (12) angeordnet ist.

7. Fahrzeugsitz nach einem der vorhergehenden Ansprüche, **dadurch gekennzeichnet, dass** die Erhebung (12") eine Höhe von maximal 1/4 des Kugeldurchmessers der Kugel(n) (14) aufweist.

8. Fahrzeugsitz nach einem der vorhergehenden Ansprüche, **dadurch gekennzeichnet, dass** mindestens eine einen Endanschlag (12') bildende Erhebung vorgesehen ist, wobei diese Erhebung eine Höhe von minimal 1/3 des Kugeldurchmessers der Kugel(n) (14) aufweist und in ihrer Funktion als Endanschlag (12') in Anlage an den Kugelhalter (15) gelangt.

9. Fahrzeugsitz nach einem der vorhergehenden Ansprüche, **dadurch gekennzeichnet, dass** der Fahrzeugsitz eine Easy-Entry-Funktion aufweist, und die Erhebung (12") derart angeordnet ist, dass der Fahrzeugsitz (1) in einem Bereich von maximal fünf Kugeldurchmessern der Kugeln (14) zwischen dem vorderen Endanschlag (12') und der Erhebung (12") verschiebbar ist.

10. Fahrzeugsitz nach einem der vorhergehenden Ansprüche, **dadurch gekennzeichnet, dass** der Kugelhalter (15) eine Schräge (15') aufweist und leicht in Kontakt mit der Erhebung (12") gelangt, wobei beim Überfahren eine elastische Verformung des Kugelhalters (15) erfolgt.

## Claims

1. Longitudinally adjustable vehicle seat (1) having at least one seat rail pair (10), having a first seat rail (12) which is fixed to the structure, and a second seat rail (13) which is guided in said first seat rail (12) and is connected to the vehicle seat (1),
balls (14) which are arranged in ball holders (15) and are arranged between the first seat rail (12) and the second seat rail (13), in order to reduce the friction, the first seat rail (12) forming a ball raceway, along which the balls (14) roll,
a first end stop and a second end stop which delimit the movability of the seat rail pair (10), **characterized in that**
at least one elevation (12") which protrudes into the ball raceway is provided, it being possible for the elevation (12") to be overcome by at least one ball (14) and the ball holder (15).

2. Vehicle seat according to Claim 1, **characterized in that** the elevation (12") is formed by a plastic deformation of the seat rail (12) on account of a pressed-in portion from the outside.

3. Vehicle seat according to Claim 1 or 2, **characterized in that** the vehicle seat has an easy-entry function, and the elevation (12") is arranged in such a way that at least the frontmost ball (14) can pass the elevation (12"), as a result of which the vehicle seat (1) is held in the easy-entry position.

4. Vehicle seat according to Claim 3, **characterized in that**, if at least the frontmost ball (14) has passed the elevation (12"), the vehicle seat (1) can be displaced in a limited region between the front end stop (12') and the elevation (12").

5. Vehicle seat according to one of the preceding claims, **characterized in that** the elevation (12") is arranged in a rounded corner region of the first seat rail (12).

6. Vehicle seat according to one of the preceding claims, **characterized in that** the elevation (12") is arranged in the direction of the bisector between the bottom (12a) and the side (12b) of the seat rail (12).

7. Vehicle seat according to one of the preceding claims, **characterized in that** the elevation (12") has a height of at most 1/4 of the ball diameter of the ball/balls (14).

8. Vehicle seat according to one of the preceding claims, **characterized in that** at least one elevation which forms an end stop (12') is provided, said elevation having a height of at least 1/3 of the ball diameter of the ball/balls (14) and, in its function as an end stop (12'), comes into contact with the ball holder (15).

9. Vehicle seat according to one of the preceding claims, **characterized in that** the vehicle seat has an easy-entry function, and the elevation (12") is arranged in such a way that the vehicle seat (1) can be displaced in a region of at most five ball diameters of the balls (14) between the front end stop (12') and the elevation (12").

10. Vehicle seat according to one of the preceding claims, **characterized in that** the ball holder (15) has a bevel (15') and passes easily into contact with the elevation (12"), an elastic deformation of the ball holder (15) taking place when moving over said elevation (12").

## Revendications

1. Siège de véhicule (1) réglable en longueur comprenant
au moins une paire de rails de siège (10), comprenant un premier rail de siège (12) fixé à la structure, un deuxième rail de siège (13) relié au siège de véhicule (1) et guidé dans ce premier rail de siège (12),
des billes (14) disposées dans des supports de billes (15), lesquelles sont disposées entre le premier rail de siège (12) et le deuxième rail de siège (13), afin de réduire la friction, le premier rail de siège (12) formant un chemin de roulement de billes, le long duquel les billes (14) roulent, une première butée de fin de course et une deuxième butée de fin de course, lesquelles limitent la mobilité de la paire de rails de siège (10), **caractérisé en ce**
**qu'**au moins un rehaussement (12") faisant saillie dans le chemin de roulement de billes est prévu, le rehaussement (12") pouvant être surmonté par au moins une bille (14) et le support de billes (15).

2. Siège de véhicule selon la revendication 1, **caractérisé en ce que** le rehaussement (12") est formé par une déformation plastique du rail de siège (12) en raison d'un enfoncement depuis l'extérieur.

3. Siège de véhicule selon la revendication 1 ou 2, **caractérisé en ce que** le siège de véhicule présente une fonction d'accès facile, et le rehaussement (12") est disposé de telle sorte qu'au moins la bille la plus à l'avant (14) puisse passer devant le rehaussement (12"), de telle sorte que le siège de véhicule (1) soit retenu dans la position d'accès facile.

4. Siège de véhicule selon la revendication 3, **caractérisé en ce que** le siège de véhicule (1), quand au moins la bille la plus à l'avant (14) est passée devant le rehaussement (12"), peut être coulissé dans une région limitée entre la butée de fin de course avant (12') et le rehaussement (12").

5. Siège de véhicule selon l'une quelconque des revendications précédentes, **caractérisé en ce que** le rehaussement (12") est disposé dans une région de coin arrondie du premier rail de siège (12).

6. Siège de véhicule selon l'une quelconque des revendications précédentes, **caractérisé en ce que** le rehaussement (12") est disposé dans la direction de la bissectrice entre le fond (12a) et le côté (12b) du rail de siège (12).

7. Siège de véhicule selon l'une quelconque des revendications précédentes, **caractérisé en ce que** le rehaussement (12") présente une hauteur d'au maximum 1/4 du diamètre de bille de la/des bille(s) (14).

8. Siège de véhicule selon l'une quelconque des revendications précédentes, **caractérisé en ce qu'**au moins un rehaussement formant une butée de fin de course (12') est prévu, ce rehaussement présentant une hauteur d'au minimum 1/3 du diamètre de bille de la/des bille (s) (14) et, dans sa fonction en tant que butée de fin de course (12'), parvenant en appui contre le support de billes (15).

9. Siège de véhicule selon l'une quelconque des revendications précédentes, **caractérisé en ce que** le siège de véhicule présente une fonction d'accès facile, et le rehaussement (12") est disposé de telle sorte que le siège de véhicule (1) puisse être coulissé dans une région d'au maximum cinq diamètres de bille des billes (14) entre la butée de fin de course avant (12') et le rehaussement (12").

10. Siège de véhicule selon l'une quelconque des revendications précédentes, **caractérisé en ce que** le support de billes (15) présente un biseau (15') et parvient facilement en contact avec le rehaussement (12"), une déformation élastique du support de billes (15) ayant lieu lorsqu'il passe sur l'élévation.
